# EUROPÄISCHE PATENTANMELDUNG

(11) **EP 1 890 119 A2**
(43) Veröffentlichungstag der Anmeldung: **20.02.2008**
(21) Anmeldenummer: 07112083.6
(22) Anmeldetag: 09.07.2007
(51) Int. Cl.: G01H 11/00

(54) **Vorrichtung zur Erfassung von Körperschall**

(30) Priorität: 18.08.2006 DE 102006038843
(71) Anmelder: ROBERT BOSCH GMBH, 70442 Stuttgart (DE)
(72) Erfinder: Walther, Ralf, 26160, Bad Zwischenahn (DE)

(57) **Zusammenfassung**

Es wird eine Vorrichtung zur Erfassung von Körperschall vorgeschlagen, die ein Gehäuse aufweist, mit dem wenigstens eine Leiterplatte mit wenigstens einem Befestigungsmittel verbunden ist. Weiterhin ist eine Körperschallsensorik vorgesehen, die auf der wenigstens einen Leiterplatte in der Nähe des wenigstens einen Befestigungsmittels befestigt ist, wobei das Gehäuse derart mit der Körperschallsensorik verbunden ist, dass der Körperschall direkt vom Gehäuse auf die Körperschallsensorik übertragen wird.

## Beschreibung

### Stand der Technik

Die Erfindung betrifft eine Vorrichtung zur Erfassung von Körperschall nach der Gattung des unabhängigen Patentanspruchs.

Aus WO 2005/036108 ist es bekannt, einen Körperschallsensor in einer Zentraleinheit anzuordnen.

### Offenbarung der Erfindung

Die erfindungsgemäße Vorrichtung zur Erfassung von Körperschall mit den Merkmalen des unabhängigen Patentanspruchs hat den Vorteil, dass durch die Verbindung des Gehäuses mit der Körperschallsensorik eine ausgezeichnete Kraftübertragung vorliegt und somit das Körperschallsignal mit geringer Dämpfung und unverfälscht durch die Körperschallsensorik erfasst werden kann. Insbesondere kann dadurch der Einfluss der schwingenden Leiterplatte oder des schwingenden Körperschallsensors unterdrückt werden. Weiterhin ist vorteilhaft, dass sich die Körperschallsensorik in der Nähe von wenigstens einem Befestigungsmittel, besser aber zwei oder drei der Leiterplatte befindet. Auch damit ist eine gute Kraftübertragung gewährleistet. Außerdem sind in der Nähe der Befestigungsmittel die Schwingungen der Leiterplatte geringer.

Körperschall ist insbesondere zur Ansteuerung von Personenschutzmitteln ein wichtiges Messsignal, da es eine globale Information über Aufprallarten und Kollisionsschwere gibt. Insbesondere kann zur Erfassung des Körperschalls ein herkömmlicher Beschleunigungssensor, der mikromechanisch hergestellt ist, verwendet werden, wobei dann nicht der Tiefpass bei beispielsweise 400 Hz verwendet wird, sondern insbesondere die höherfrequenten Signale als Körperschallsignale erfasst werden.

Durch die in den abhängigen Ansprüchen aufgeführten Maßnahmen und Weiterbildungen sind vorteilhafte Verbesserungen der im unabhängigen Patentanspruch angegebenen Vorrichtung zur Erfassung von Körperschall möglich.

Besonders vorteilhaft ist, dass die Verbindung zwischen dem Gehäuse und der Körperschallsensorik als wenigstens ein Finger ausgebildet ist, wobei der Finger dann derart dimensioniert ist und von der Fingergeometrie ausgebildet ist, dass seine Eigenschwingungen außerhalb eines Nutzfrequenzbereichs der Körperschallsensorik liegen beziehungsweise sein Einfluss auf die Sensorik möglichst gering ist. Dieser Nutzfrequenzbereich ist beispielsweise zwischen 1 und 50 kHz. Damit wird vermieden, dass diese Verbindung des Gehäuses mit der Körperschallsensorik selbst Einfluss auf die Messung nimmt beziehungsweise zu vernachlässigend klein ist. Der Finger kann aus Metall für eine gute Körperschallsignalübertragung oder aus anderen geeigneten Materialien hergestellt sein. Das gleiche gilt für das Gehäuse, das aus Kunststoff, oder Metall, oder anderen geeigneten Stoffen hergestellt wird.

Vorteilhafter Weise ist das Gehäuse kraftflüssig mit der Körperschallsensorik verbunden. Dazu kann die Verbindung beispielsweise auf die Körperschallsensorik geklebt sein, oder verschweißt sein, oder verklemmt. Die kraftflüssige Verbindung ermöglicht eine optimale Körperschallübertragung.

Es ist weiterhin von Vorteil, dass die Verbindung zur Körperschallsensorik einstückig mit dem Gehäuse ist. Dies bedeutet zwar ein gewisser Aufwand in der Herstellung des Gehäuses, dafür werden jedoch spätere Arbeitsschritte wie das Anfügen eines Fingers an das Gehäuse und die Justierung vermieden.

Es ist weiterhin von Vorteil, dass die Vorrichtung als Steuergerät zur Ansteuerung von Personenschutzmitteln ausgebildet ist. Dann sind auf der Leiterplatte die übrigen Komponenten des Steuergeräts angeordnet und das Signal der Körperschallsensorik wird direkt in einen Ansteuerungsalgorithmus für die Personenschutzmittel integriert.

Alternativ ist es möglich, dass die Vorrichtung als Sensorbox ausgebildet ist. Üblicherweise ist das Airbagsteuergerät heute auf dem Fahrzeugtunnel angeordnet. Dies hat jedoch den Grund, dass sich Inertialsensoren im Steuergerät befinden. Werden diese in der Sensorbox ausgelagert, kann das Steuergerät auch an anderen Orten im Fahrzeug leicht eingebaut werden. In der Sensorbox können neben einer Körperschallsensorik auch andere Inertialsensoren, wie Beschleunigungssensoren und Drehraten- oder Drehwinkelsensoren angeordnet sein.

Ausführungsbeispiele der Erfindung sind in der Zeichnung dargestellt und werden in der nachfolgenden Beschreibung näher erläutert.

Es zeigen Figur 1 ein Blockschaltbild eines Steuergeräts zur Ansteuerung von Personenschutzmitteln, Figur 2 ein Blockschaltbild einer Sensorbox, Figur 3 eine Seitenansicht der erfindungsgemäßen Vorrichtung und Figur 4 eine weitere Seitenansicht der erfindungsgemäßen Vorrichtung.

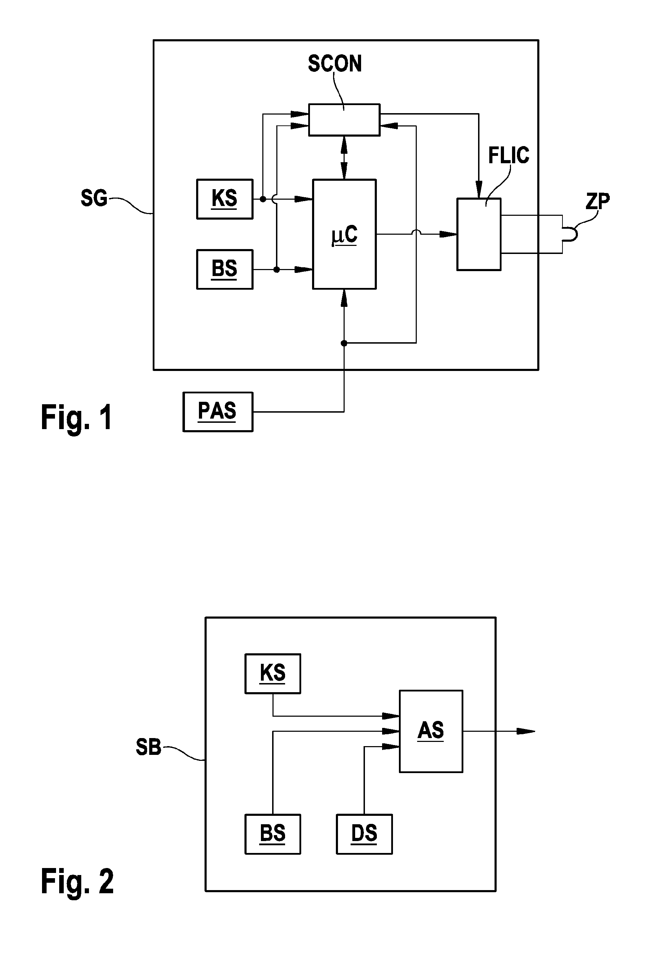

Figur 1 erläutert in einem Blockschaltbild ein Steuergerät zur Ansteuerung von Personenschutzmitteln. In einem Steuergerät SG ist eine Körperschallsensorik KS von einer Beschleunigungssensorik BS vorgesehen. Die Körperschallsensorik KS und die Beschleunigungssensorik BS weisen mikromechanisch ausgebildete Sensorstrukturen, insbesondere Fingerstrukturen auf, um mittels einer Kapazitätsänderung die Körperschallsignale bzw. die Beschleunigungssignale wiederzugeben. Diese Kapazitätsänderung drückt sich dann nämlich in einer Spannungsänderung aus, die verstärkt und digitalisiert wird. Die Digitalisierung kann bereits in den Sensoren KS und BS selbst erfolgen oder sie erfolgt im Mikrocontroller µC. Die Sensorsignale gehen aber weiterhin auf einen Sicherheitsbaustein SCON. Dieser überprüft parallel zum Mikrocontroller µC allerdings mit einem weit einfacheren Algorithmus, ob diese Sensorsignale eine Einsteuerung von Personenschutzmitteln rechtfertigen. Es ist möglich, dass die Signale des Köperschallsensors KS nicht zum Sicherheitshalbleiter SCON übertragen werden, sondern nur die Signale der Beschleunigungssensoren BS. Der Sicherheitshalbleiter SCON ist auch über ein Datenein-ausGang mit dem Mikrocontroller µC verbunden. Diese Verbindung dient zur Überwachung des Mikrocontrollers µC. Dabei weist der Sicherheitshalbleiter SCON eine Watchdog-Funktion auf, um dem Mikrocontroller µC Aufgaben zu stellen, die der Mikrocontroller µC zu lösen hat und dann die Lösung an den SCON zurückübertragen muss. Mit dieser Überprüfung gelingt es, die Funktionsweise des Mikrocontrollers zu überwachen. Der Sicherheitshalbleiter SCON gibt die Zündkreisschaltung FLIC frei, wenn er erkennt, dass die an ihn angeschlossenen Sensoren Signale gemessen haben, die eine Auslösung rechtfertigen. Parallel dazu führt der Mikrocontroller µC den Ansteuerungsalgorithmus durch. Dabei wird beispielsweise mit variablen Schwellen gearbeitet. Das Beschleunigungssignal des Beschleunigungssensors BS und auch solche Signale von externen Beschleunigungssensoren PAS werden hier herangezogen. Die Signale der Körperschallsensorik KS kann die Unfallart bzw. Unfallschwere erkannt werden. Insbesondere auch eine sogenannte Misuse-Unterdrückung, also ein Nichtauslösefall, kann durch die Verwendung des Körperschallsignals verbessert werden. Insbesondere kann der Körperschall zur Frontcrash-Diskriminierung verwendet werden. Dabei korreliert der entstehende Körperschall mit der Crashenergie und dem Volumen des deformierten und insbesondere der gebrochenen Fahrzeugstruktur. Dabei wird dann ausgenutzt, dass für unterschiedliche Crashs sich die Fahrzeugstruktur unterschiedlich deformiert und unterschiedliche Fahrzeugstrukturen berechnen. Steuert nun der Mikrocontroller µC die Zündkreisschaltung FLIC an, beispielsweise über einen SPI-Bus, und hat der Sicherheitshalbleiter SCON den Zündkreis FLIC freigegeben, dann wird eine Zündpille ZP, auch Zündelement genannt, bestromt und führt so zur Auslösung. Der Einfachheit halber sind hier andere Komponenten wie die Energiereserve, Interfacebausteine weggelassen worden, da sie zum Verständnis der Funktion nicht notwendig sind.

Figur 2 erläutert in einem Blockschaltbild den Aufbau einer Sensorbox. Die Sensorbox SB weist einen Körperschallsensor KS, einen Beschleunigungssensor BS und einen Drehratensensor DS auf, sowie einen elektronischen Baustein as, der als integrierter Schaltkreis vorhanden ist. Die Sensoren KS, BS und DS liefern ihre Signale an den Baustein as, der diese Signale in ein Übertragungsformat gibt und dann die Daten an ein Steuergerät zur Auswertung überträgt. Die Signale der Sensoren KS, BS und DS werden durch mikromechanische Elemente erzeugt, die sich unter dem Einfluss von kinematischer Effekte oder auch rotatorischer Bewegungen verändern. Diese Veränderungen drücken sich üblicherweise in Kapazitätsänderungen aus, die als Spannungsänderungen vorliegen. Diese Spannung wird dann entweder im Sensor selbst, oder durch den Baustein as oder einen weiteren Baustein verstärkt und digitalisiert. Die digitalisierten Daten können dann ins Übertragungsformat gegeben werden, um sie beispielsweise an das Steuergerät SG zu übertragen. Neben den hier aufgeführten Bausteinen können auch weitere Bausteine in der Sensorbox SB insbesondere weitere Sensoren vorgesehen sein.

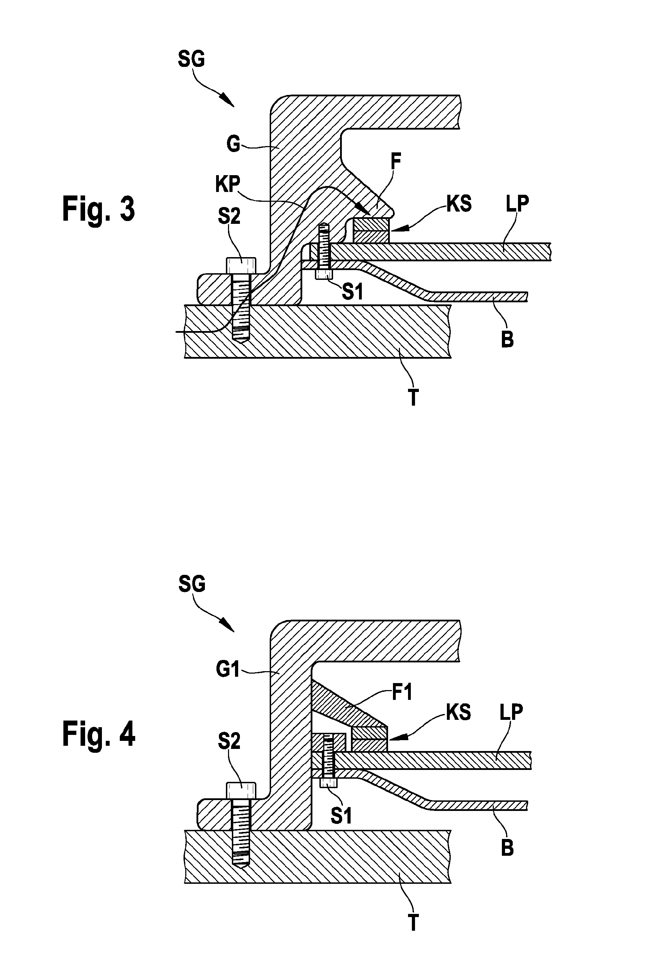

Figur 3 zeigt eine Seitenansicht der erfindungsgemäßen Vorrichtung. Gezeigt wird eine Seitenansicht eines Steuergeräts SG, wobei die Darstellung auch für die Sensorbox SB Gültigkeit hat. Ein Gehäuse G des Steuergeräts SG ist über die Schraube S2 mit der Karosserie T, beispielsweise auf den Fahrzeugtunnel, verbunden. Im Inneren des Gehäuses G liegt eine Leiterplatte LP an dem Gehäuse G an. Weiterhin ist auch eine Bodenplatte b vorhanden, die ebenfalls am Gehäuse G anliegt. Die Bodenplatte B, die Leiterplatte LP und das Gehäuse G sind über die Schraube S1 miteinander verbunden. Weitere hier nicht dargestellte Befestigungsmittel können vorhanden sein. Auf der Leiterplatte LP ist eine Körperschallsensorik KS aufgebracht. Diese befindet sich in der Nähe der Schraube S1 und damit des Befestigungsmittels, um Körperschallsignale möglichst gut zu erhalten und sich in einem Bereich der Leiterplatte LP befinden, der nicht so stark schwingen kann. Das Gehäuse G ist über eine Fingerstruktur F mit der Oberseite der Körperschallsensorik KS verbunden. Diese Fingerstruktur erfüllt mehrere Aufgaben. Zum einen unterdrückt sie die Schwingungen der Körperschallsensorik KS und der Leiterplatte LP. Zum anderen führt sie zu einer optimalen Übertragung des Körperschalls über die Kraftlinie KP. Vorliegend ist die Fingerstruktur einstückig mit dem Gehäuse ausgeführt. Eine zweistückige oder mehrstückige Ausführung ist möglich, insbesondere wenn das Gehäuse und die Fingerstruktur unterschiedliche Materialien aufweisen. Neben Schrauben können noch andere Befestigungsmittel wie Nieten verwendet werden.

Figur 4 zeigt nun die Alternative der zweistückigen Ausführung. Wiederum ist ein Gehäuse G1 über eine Schraube S2 mit dem Fahrzeugchassis T verbunden. An das Gehäuse G1 liegt eine Leiterplatte LP und eine Bodenplatte B an, die über eine Ausformung mit dem Gehäuse G1 über die Schraube S1 verbunden sind. An das Gehäuse G1 ist die Fingerstruktur F1 angefügt, beispielsweise durch Schweißen. Diese Fingerstruktur F1 ist kraftschlüssig mit der Körperschallsensorik KS verbunden, um auch hier den optimalen Kraftübertrag zu gewährleisten. Die Körperschallsensorik KS ist auf der Leiterplatte LP befestigt.

## Patentansprüche

1. Vorrichtung zur Erfassung von Körperschall mit:
- einem Gehäuse (G, G1), mit dem wenigstens eine Leiterplatte (LP) mit wenigstens einem Befestigungsmittel (S1) verbunden ist
- einer Körperschallsensorik (KS), die auf der wenigstens einen Leiterplatte (LP) in der Nähe des wenigstens einen Befestigungsmittels (S1) befestigt ist, wobei das Gehäuse (G, G1) derart mit der Körperschallsensorik verbunden ist, dass der Körperschall direkt vom Gehäuse (G1, G) auf die Körperschallsensorik (KS) übertragen wird.

2. Vorrichtung nach Anspruch 1, **dadurch gekennzeichnet, dass** die Verbindung zwischen dem Gehäuse (G, G1) und der Körperschallsensorik (KS) als wenigstens ein Finger (F, F1) ausgebildet ist, wobei der wenigstens eine Finger (F,F1) derart dimensioniert ist, dass seine Eigenschwingungen außerhalb eines Nutzfrequenzbereichs der Körperschallsensorik (KS) liegen.

3. Vorrichtung nach Anspruch 2, **dadurch gekennzeichnet, dass** der Nutzfrequenzbereich zwischen 1 und 50 kHz liegt.

4. Vorrichtung nach einem der vorhergehenden Ansprüche, **dadurch gekennzeichnet, dass** das Gehäuse (G,G1) kraftschlüssig mit der Körperschallsensorik (KS) verbunden ist.

5. Vorrichtung nach einem der vorhergehenden Ansprüche, **dadurch gekennzeichnet, dass** die Verbindung zur Körperschallsensorik (KS) einstück mit dem Gehäuse (G, G1) ist.

6. Vorrichtung nach einem der vorhergehenden Ansprüche, **dadurch gekennzeichnet, dass** die Vorrichtung als Steuergerät (SG) zur Ansteuerung von Personenschutzmitteln ausgebildet ist.

7. Vorrichtung nach einem der Ansprüche 1 bis 5, **dadurch gekennzeichnet, dass** die Vorrichtung als Sensorbox (SB) ausgebildet ist.

8. Vorrichtung nach Anspruch 1, **dadurch gekennzeichnet, dass** die Körperschallsensorik derart in der Nähe des wenigstens einen Befestigungsmittels (S1) angeordnet ist, dass die Schwingungen der Leiterplatte und der Körperschallsensorik (KS) gedämpft sind.
